# EUROPÄISCHE PATENTANMELDUNG

(11) **EP 1 424 251 A2**
(43) Veröffentlichungstag der Anmeldung: **02.06.2004**
(21) Anmeldenummer: 03012390.5
(22) Anmeldetag: 30.05.2003
(51) Int. Cl.: B60S 1/08, G01N 21/45

(54) **Vorrichtung zur Erkennung von Beschlag auf Innen-und Aussenseiten von Scheiben**

(30) Priorität: 29.11.2002 DE 10255776
(71) Anmelder: ROBERT BOSCH GMBH, 70442 Stuttgart (DE)
(72) Erfinder: Michenfelder, Gebhard, 77839 Lichtenau (DE); Schneider, Andreas, 77833 Ottersweier (DE)

(57) **Zusammenfassung**

Es wird eine Umlenkeinrichtung (2,3,4,5) für eine elektromagnetische Messstrahlung (A,B) eines Beschlagsensors (51,52,E) vorgeschlagen, mit der eine kombinierte Erkennung von Regen/Niederschlag auf einer Innen- (8) und Außenseite (6) einer Scheibe (10), insbesondere eines Kraftfahrzeuges möglich ist. Durch eine einstückige Ausgestaltung der Umlenkeinrichtung (2,3,4,5) als eine im Wesentlichen transparente Folie, die in die Scheibe (10) eingebracht wird, kann eine Beeinträchtigung der Sicht des Fahrers weitgehend vermieden werden.

## Beschreibung

Die Erfindung betrifft eine Vorrichtung zur Erkennung von Beschlag auf Innen- und Außenseiten von Scheiben, insbesondere Scheiben von Kraftfahrzeugen.

Im Stand der Technik sind separate Einzelsensoren zur Erkennung von Regen/Niederschlag auf einer Außenseite einer Windschutzscheibe und separate Einzelsensoren auf einer Innenseite der Windschutzscheibe zur Erkennung von Niederschlag bekannt. Übliche Messverfahren zur Erkennung derartiger Beschläge beruhen dabei auf kapazitiven, resistiven und optischen Prinzipien. Bei optischen Messverfahren kommen auch holografische Sensoren zum Einsatz. Durch die Verwendung mehrerer separater Einzelsensoren für die Erkennung von Regen auf der Außenseite bzw. Beschlag auf der Innenseite der Windschutzscheiben kann sich in nachteiliger Weise ein erhöhter Fertigungs- und Montageaufwand mit entsprechend erhöhten Kosten ergeben.

Es ist daher die Aufgabe der vorliegenden Erfindung, eine Vorrichtung zur kombinierten Erkennung von Beschlägen auf Außen- und Innenseiten von Scheiben, insbesondere Scheiben von Kraftfahrzeugen, bereitzustellen.

Die Aufgabe wird erfindungsgemäß gelöst mit einer Umlenkeinrichtung für eine elektromagnetische Messstrahlung eines Beschlagsensors mit den Merkmalen gemäß Patentanspruch 1 und mit einem Beschlagsensor, insbesondere für eine Scheibe, mit den Merkmalen gemäß Patentanspruch 7.

Bevorzugte Weiterbildungen der Erfindung sind in den abhängigen Ansprüchen angegeben.

Die erfindungsgemäße Umlenkeinrichtung für eine elektromagnetische Messstrahlung eines Beschlagsensors umfasst zwei flächig ausgebildete Elemente, die zu definierten Umlenkungen der Messstrahlung auf Grenzflächen einer Scheibe zur Luft benutzt werden. Dabei dient ein erstes flächig ausgebildetes Element zur definierten Umlenkung der Messstrahlung auf eine erste Grenzfläche der Scheibe zur Luft. Ein zweites flächig ausgebildetes Element dient zur Umlenkung der Messstrahlung auf eine zweite Grenzfläche der Scheibe zur Luft.

Bei beiden vorgenannten Umlenkungen trifft die elektromagnetische Messstrahlung unter Winkeln auf die Grenzflächen der Scheibe, die größer sind als der Grenzwinkel der Totalreflexion. Dadurch kommt es bei Nichtvorhandensein von Beschlag auf der Scheibenaußenseite bzw. der Scheibeninnenseite zu einer Totalreflexion der elektromagnetischen Messstrahlung, wobei die Messstrahlung auf die Umlenkeinrichtung umgelenkt wird. Danach wird die Messstrahlung mit Hilfe der Umlenkeinrichtung ein weiteres mal über die Grenzflächen der Scheibe zur Luft umgelenkt und anschließend über die Umlenkeinrichtung aus der Scheibe ausgestrahlt. Die beiden flächig ausgebildeten Elemente zusammen sind einstückig ausgebildet, wodurch sich in vorteilhafter Weise eine einfache Einbringung in die Scheibe erreichen lässt. Außerdem lässt sich durch die Einstückigkeit der Umlenkeinrichtung ein Produktions- und Bearbeitungsprozess günstigerweise vereinfachen, was in einem Kostenvorteil resultiert.

Im Falle dass auf der Scheibenaußen- bzw. Scheibeninnenseite ein Beschlag, beispielsweise Regentropfen, Schnee, Feuchtigkeitsbeschlag vorhanden ist, ist die Bedingung der Totalreflexion für die Messstrahlung verletzt, da sich der Berechungsindex von einem Wert Glas/Luft auf einen Wert Glas/Wasser ändert. Dadurch wird ein gewisser Anteil der elektromagnetischen Messstrahlung aus der Scheibe ausgekoppelt, was eine Schwächung der Messstrahlung bedeutet, wobei ein Grad der Schwächung ein Maß für den Beschlag darstellt.

Die Messstrahlung wird nach dem Ausstrahlen aus der Scheibe in einer separaten Auswerteelektronik intensitätsmässig ausgewertet und kann daraufhin einen Wischermotor und/oder eine Gebläseregelung des Kraftfahrzeuges aktivieren. In vorteilhafter Weise wird durch die vorliegende Erfindung ein kombinierter Sensor für die gemeinsame Erkennung von Beschlag auf Scheibenaußenseiten bzw. Scheibeninnenseiten bereitgestellt, wodurch eine aufwendige Bereitstellung und Benutzung mehrerer separater Einzelsensoren umgangen werden kann.

Weiterhin ist es durch eine Ausgestaltung der Umlenkeinrichtung als eine im wesentlichen transparente Folie in vorteilhafter Weise möglich, eine Beeinträchtigung der Sicht des Fahrers durch die Scheibe zu minimieren.

Ferner ist es durch eine individuell gestaltbare Anordnung der beiden flächig ausgebildeten Elemente der Umlenkeinrichtung möglich, die Umlenkeinrichtung an vorhandene räumliche Gegebenheiten der Scheibe des Kraftfahrzeugs anzupassen.

Die Erfindung wird im Folgenden anhand der beigefügten Figuren näher beschrieben. Dabei zeigt:
- Fig. 1: eine schematische Querschnittsansicht eines Teiles einer Ausführungsform der erfindungsgemäßen Umlenkeinrichtung;
- Fig. 2: eine schematische Querschnittsansicht einer Ausführungsform eines erfindungsgemäßen Beschlagsensors innerhalb einer Scheibe; und
- Fig. 3: eine schematische, perspektivische Draufsicht auf eine weitere Ausführungsform der erfindungsgemäßen Umlenkeinrichtung.

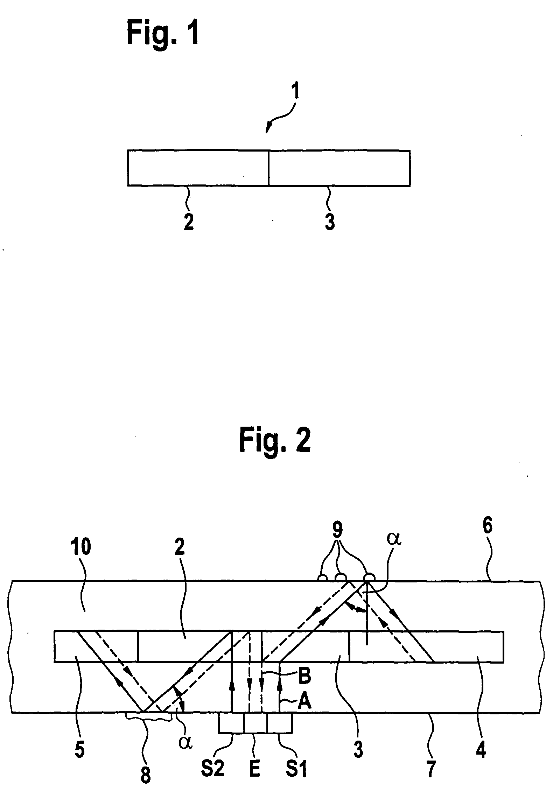

Figur 1 zeigt eine Querschnittsansicht eines Teiles der erfindungsgemäßen Umlenkeinrichtung, wobei ein erstes Einkoppelhologramm 2 und ein zweites Einkoppelhologramm 3 zusammen ein Kombihologramm 1 repräsentieren. Die beiden Einkoppelhologramme 2, 3 dienen zur definierten Umlenkung einer elektromagnetischen Messstrahlung, die im Wesentlichen in vertikaler Richtung auf das Kombihologramm 1 eingestrahlt wird.

Figur 2 zeigt eine schematische Querschnittsansicht einer Ausführungsform eines erfindungsgemäßen Beschlagsensors innerhalb einer Scheibe 10 eines Kraftfahrzeugs. Dabei umfasst der Beschlagsensor außer den beiden Einkoppelhologrammen 2, 3 noch sogenannte Retroreflektoren 4, 5, die die von den Grenzflächen 6, 7 der Scheibe zur Luft reflektierte Messstrahlung empfangen und über die Grenzflächen 6, 7 und die Einkoppelhologramme 2, 3 aus der Scheibe 10 ausstrahlen.

Dabei dient das erste Einkoppelhologramm 3 in Kombination mit dem ersten Retroreflektor 4 dazu, die von einer ersten Sendeeinrichtung S1 in die Scheibe 10 eingestrahlte Messstrahlung in einem Strahlengang A innerhalb der Scheibe 10 definiert umzulenken. Das erste Einkoppelhologramm 3 lenkt die eingestrahlte Messstrahlung unter einem derartigen Winkel zu einer Scheibenaußenseite 6 der Scheibe 10 um, dass diese unter einem Winkel α, der größer ist als der Winkel der Totalreflexion der Scheibe zur Luft, auftrifft und zum ersten Retroreflektor 4 reflektiert wird. Vom ersten Retroreflektor 4 wird die Messstrahlung daraufhin in einem Strahlengang B von der Scheibenaußenseite 6 zum ersten Einkoppelhologramm 3 und zu einer Empfangseinrichtung E, die sich außerhalb der Scheibe befindet, umgelenkt.

Die Empfangseinrichtung E sensiert die Intensität der aus der Scheibe 10 ausgestrahlten elektromagnetischen Messstrahlung. Ist Beschlag in Form von beispielsweise Regentropfen 9 auf der Scheibenaußenseite 6 vorhanden, dann wird ein Teil der Messstrahlung aus der Scheibe 10 ausgekoppelt. Folglich ist die Messstrahlung je nach Grad des Beschlags in entsprechender Weise geschwächt. Das Ausmaß der Schwächung der Messstrahlung ist ein Grad für das Ausmaß des Beschlages und kann anhand eines in einem Mikrokontroller ablaufenden Auswerteprogramms verwendet werden, um einen Wischermotor des Kraftfahrzeugs anzusteuern, der einen Wischarm einer Wischanlage antreibt.

Fig. 2 zeigt, dass das zweite Einkoppelhologramm 2 und der zweite Retroreflektor 5 benutzt werden, um die von einer zweiten Sendeeinrichtung S2 eingestrahlte Messstrahlung auf eine Scheibeninnenseite 7 der Scheibe 10 umzulenken. In analoger Weise wie zuvor für einen Beschlag 9 auf der Scheibenaußenseite 6 geschildert, kann mit Hilfe der intensitätsmäßigen Sensierung der Messstrahlung ein Beschlag 8 auf der Scheibeninnenseite 7 detektiert werden.

Ein besonderer Vorteil der erfindungsgemäßen Umlenkeinrichtung 2, 3, 4, 5 besteht darin, dass diese als eine im Wesentlichen transparente Folie ausgebildet ist, die sich mit Hilfe von herkömmlichen Ätz- und/oder Prägeverfahren auf einfache Weise herstellen und bearbeiten lässt. Dadurch ist es möglich, optisch aktive Flächen, die in Fig. 2 für das erste Einkoppelhologramm 3 sowie den ersten Retroreflektor 4 an einer Unterseite der Folie dargestellt ist, bzw. für das zweite Einkoppelhologramm 2 und den zweiten Retroreflektor 5 an der Oberseite der Folie, in geeigneter Art und Weise zu variieren und zu kombinieren. Die optisch aktiven Flächen können durch Hologramme und/oder Gitter bereitgestellt werden.

Als erste und zweite Sende- bzw. Empfangseinrichtung S1, S2, E sind im Stand der Technik einschlägig bekannte Dioden einsetzbar, die die Messstrahlung im sichtbaren bzw. nichtsichtbaren Wellenlängenbereich aussenden und empfangen.

Die erste und zweite Lichtsende- bzw. Empfangseinrichtung S1, S2, E wird bevorzugt an Positionen im Fahrzeug angebracht, die die Sicht des Fahrers möglichst gering beeinflussen, beispielsweise auf der Scheibeninnenseite 7 an einer Rückseite eines Innenspiegels.

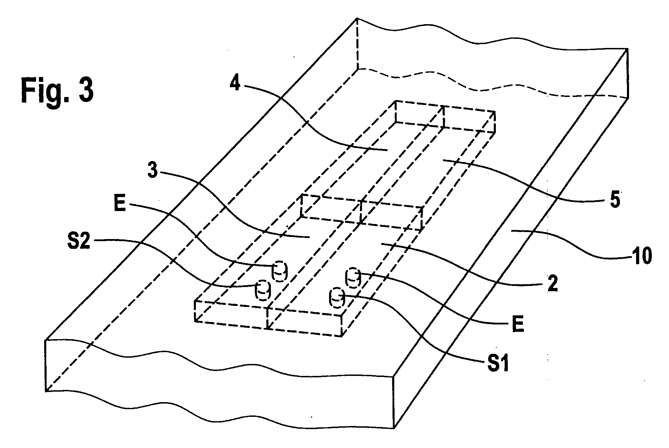

Figur 3 zeigt in perspektivischer Darstellung ein weiteres bevorzugtes Ausführungsbeispiel der erfindungsgemäßen Umlenkeinrichtung innerhalb der Scheibe 10. Dabei ist die Umlenkeinrichtung in einer sogenannte Nebeneinanderanordnung ausgebildet, wobei das erste Einkoppelhologramm 3 und der erste Retroreflektor 4 in Messstrahlrichtung neben dem zweiten Einkoppelhologramm 2 bzw. dem zweiten Retroreflektor 5 angeordnet ist. Dadurch erhält jede der Kombinationen aus Einkoppelhologramm und Retroreflektor eine eigene Sende- und Empfangseinrichtung, wodurch in vorteilhafter Weise eine Messgenauigkeit der sensierten Messstrahlung erhöht werden kann.

Außerdem ist es bei dieser Ausführungsform möglich, die Umlenkeinrichtung in ihrer Länge zu reduzieren und in ihrer Breite zu erhöhen, wodurch in vorteilhafter Weise räumliche Gegebenheiten der Scheibe berücksichtigt werden können.

Eine Hintereinanderanordnung des ersten und zweiten Einkoppelhologramms 2, 3 und des ersten und zweiten Retroreflektors 4, 5 gemäß Darstellung in Fig. 2 bietet den Vorteil, dass gegenüber der in Fig. 3 gezeigten Nebeneinanderanordnung eine Empfangseinrichtung E für den erfindungsgemäßen Beschlagsensor eingespart werden kann. Dadurch kann die Empfangseinrichtung E zur Sensierung der von der Scheibenaußenseite 6 und von der Scheibeninnenseite 7 reflektierten Messstrahlung verwendet werden.

Die erfindungsgemäße Umlenkeinrichtung kann weiterhin an einer einzelnen der Grenzflächen 6, 7 der Scheibe 10 angebracht werden, wodurch eine Erkennung von Beschlag an dieser einzelnen Grenzfläche 6, 7 ermöglicht wird.

Der erfindungsgemäße Beschlagsensor kann in einer bevorzugten Weiterbildung auch mehrere Sende- und Empfangseinrichtungen S, E aufweisen, wodurch eine bessere Diversifikation von Messpunkten, die von der Messstrahlung an den Grenzflächen 6, 7 erfasst werden, erzielbar ist.

## Patentansprüche

1. Umlenkeinrichtung für eine elektromagnetische Messstrahlung eines Beschlagsensors, mit einem ersten flächig ausgebildeten Element (3,4) und einem zweiten flächig ausgebildeten Element (2,5), wobei das erste Element (3,4) zu einer definierten Umlenkung der Messstrahlung auf eine erste Grenzfläche (6) einer Scheibe (10) zur Luft vorgesehen ist, wobei das zweite Element (2,5) zu einer definierten Umlenkung der Messstrahlung auf eine zweite Grenzfläche (7) der Scheibe (10) zur Luft vorgesehen ist, und wobei die Umlenkeinrichtung (2,3,4,5) einstückig ausgebildet ist.

2. Umlenkeinrichtung nach Anspruch 1, wobei die Elemente in Messstrahlrichtung hintereinander angeordnet sind.

3. Umlenkeinrichtung nach Anspruch 1, wobei die Elemente in Messstrahlrichtung nebeneinander angeordnet sind.

4. Umlenkeinrichtung nach einem der Ansprüche 1 bis 3, wobei die Umlenkeinrichtung (2,3,4,5) als eine im wesentlichen transparente Folie ausgebildet ist.

5. Umlenkeinrichtung nach einem der Ansprüche 1 bis 4, wobei die Elemente vorzugsweise als Hologramm und/oder Gitter, ausgebildet sind.

6. Umlenkeinrichtung nach einem der Ansprüche 4 oder 5, wobei die Hologramme und/oder Gitter an einer Oberund/oder Unterseite der Folie ausgebildet sind.

7. Beschlagsensor, insbesondere für eine Scheibe, mit
- wenigstens einer Sendeeinrichtung (S), um eine elektromagnetische Messstrahlung im wesentlichen in vertikaler Richtung in die Scheibe (10) einzustrahlen;
- einer Umlenkeinrichtung (2,3,4,5) die einstückig innerhalb der Scheibe (10) ausgebildet ist und die die von der Sendeeinrichtung (S) eingestrahlte Messstrahlung derart zu zwei gegenüberliegenden Grenzflächen (6,7) der Scheibe (10) umlenkt, dass die Messstrahlung unter Winkeln (α), die größer als der Grenzwinkel der Totalreflexion der Scheibe (10) sind, auf die Grenzflächen (6,7) auftrifft und zurück in Richtung der Umlenkeinrichtung (2,3,4,5) reflektiert wird, wobei die von den Grenzflächen reflektierte Messstrahlung mit Hilfe der Umlenkeinrichtung (2,3,4,5) wieder aus der Scheibe (10) ausgestrahlt wird; und
- wenigstens einer Empfangseinrichtung (E), um die aus der Scheibe (10) ausgestrahlte Messstrahlung zu sensieren.

8. Beschlagsensor nach Anspruch 7, wobei die Umlenkeinrichtung (2,3,4,5) in Form einer im wesentlichen transparenten Folie ausgebildet ist.

9. Beschlagsensor nach Anspruch 8, wobei die Umlenkeinrichtung (2,3,4,5) vorzugsweise Hologramme und/oder Gitter an einer Ober- und/oder Unterseite der Folie umfasst.

10. Beschlagsensor nach einem der Ansprüche 7 bis 9, wobei der Sensor mehrere Sendeeinrichtungen (S) und mehrere Empfangseinrichtungen (E) umfasst.

11. Beschlagsensor nach einem der Ansprüche 7 bis 10, wobei der Sensor an einer der Grenzflächen (6,7) der Scheibe (10) angeordnet ist.

12. Scheibe mit einer Umlenkeinrichtung nach einem der Ansprüche 1 bis 6.
